# EUROPÄISCHE PATENTANMELDUNG

(11) **EP 1 180 537 A2**
(43) Veröffentlichungstag der Anmeldung: **20.02.2002**
(21) Anmeldenummer: 01128212.6
(22) Anmeldetag: 06.02.1997
(51) Int. Cl.: C08L 77/00, C08K 7/02

(54) **Polyamid-Formmassen mit geringerem Verschleiss**

(30) Priorität: 23.02.1996 DE 19606948
(62) Teilanmeldung aus: 97101834.6
(71) Anmelder: Ticona GmbH, 65451 Kelsterbach (DE)
(72) Erfinder: Haack, Ulrich, 64665 Alsbach (DE); Kurz, Klaus, Dr., 65451 Kelsterbach (DE); Schleith, Oskar, 65719 Hofheim (DE)

(57) **Zusammenfassung**

Formmassen, die einen Thermoplasten, mindestens ein Gleitmittel und mindestens einen faserförmigen Stoff enthalten, weisen eine hohe Abriebfestigkeit bei hoher Steifheit auf. Die Formmasse enthält zum Beispiel Polyoxymethylen, ultrahochmolekulares Polyethylen als Gleitmittel und Glasfaser. Die Formmassen werden zur Herstellung von Zahnrädern, Zahnstangen, Lägern und Ketten verwendet.

## Beschreibung

Glasfaserverstärktes Polyoxymethylen zeigt einen hohen Verschleiß.

Überraschend wurde gefunden, daß Thermoplaste, die ein Gleitmittel und einen faserförmigen Verstärkungsstoff enthalten, einen deutlich geringeren Abrieb und eine bessere Steifigkeit aufweisen als Thermoplaste, die nur ein Gleitmittel oder einen faserförmigen Stoff enthalten.

Gegenstand der Erfindung sind somit Formmassen, die einen Thermoplasten, ein Gleitmittel und einen faserförmigen Stoff enthalten.

Thermoplaste sind beispielsweise Polyester, Polyamide, Polycarbonat, Polyolefine, Polyoxymethylen, flüssigkristalline Polymere (LCP). Bevorzugte Thermoplaste sind Polyacetale, Polyester und Polyamide.

Polyacetale, insbesondere Polyoxymethylen, umfassen Homopolymere und Copolymere. Polyacetale sind beschrieben in "Becker/Braun, Kunststoff-Handbuch, Band 3/1, Kapitel 4 - Polyacetale, Carl Hanser Verlag München Wien 1992, Seite 300-395", worauf Bezug genommen wird.

Bevorzugte Polyester sind Polyethylenterephthalat (PET) und Polybutylenterephthalat (PBT). Bevorzugte Polyamide sind Polyamid 66 und Polyamid 46. Polyamide und Polyester sind beispielsweise in "Ullmann's Encyclopedia of Industrial Chemistry", ed. Barbara Elvers, Vol. A21, Kapitel Polyamide (S. 179-205) und Kapitel "Polyesters" (S. 227-251), VCH, Weinheim-Basel-Cambridge-New York 1992 beschrieben, worauf Bezug genommen wird.

Gleitmittel sind Zusätze, die das Gleit- und Abriebverhalten von Kunststoffen verbessern. Gleitmittel sind beispielsweise Molybdändisulfid, Silikonöle, Fettalkohole, Fettalkohol-dicarbonsäureester, Fettsäureester, Fettsäuren, Fettsäuremonoamide, Fettsäurediamide (Amidwachs), Metallseifen, oligomere Fettsäureester (Fettsäurekomplexester) Fettalkohol-Fettsäureester, Wachssäuren, Wachssäureester, beispielsweise Montansäureester und teilverseifte Montansäureester, polare Polyethylenwachse, unpolare Polyethylenwachse, Paraffine, Fluorpolymere und ultrahochmolekulare Polyolefine. Gleitmittel sind auch Kombinationen verschiedener Gleitmittel (Kombinationsgleitmittel). Gleitmittel werden beschrieben in "Gächter/Müller, Taschenbuch der Kunststoff-Additive, 3. Ausgabe, Carl Hanser Verlag München Wien 1994, Seite 478-504", worauf Bezug genommen wird. Bevorzugte Gleitmittel sind Polytetrafluorethylen (PTFE), ultrahochmolekulares Polyethylen, Stearylstearat und Pentaerythritol-tetrastearat. Besonders bevorzugtes Gleitmittel ist ultrahochmolekulares Polyethylen.

Faserförmige Stoffe oder Verstärkungsstoffe sind Mineralfasern, Glasfaser, modifizierte Glasfaser, Whiskers, Polymerfasern, Kohlenstoff-Faser, organische Hochmodulfasern. Modifizierte Glasfasern sind im allgemeinen Glasfasern, die chemisch behandelt wurden um die Haftung der Glasfaser mit dem Kunststoff zu verbessern. Zur Behandlung der Glasfaser dienen oft organische Silane. Bevorzugte faserförmige Stoffe sind modifizierte und unmodifizierte Glasfasern.

Die Formmassen gemäß der Erfindung enthalten beispielsweise 50 bis 90 Gewichtsprozent, bevorzugt 60 bis 80 Gewichtsprozent eines Thermoplasten, 5 bis 30 Gewichtsprozent, bevorzugt 5 bis 20 Gewichtsprozent eines Gleitmittels, 5 bis 40 Gewichtsprozent, bevorzugt 10 bis 30 Gewichtsprozent eines faserförmigen Stoffes, wobei die Summe der Anteile maximal 100 Gewichtsprozent ergibt. Die Formmassen können übliche Füllstoffe wie Kreide, Talk, Ton, Glimmer, Glaskugeln, Zinkoxid, Titandioxid, Wollastonit sowie weitere übliche Zusatzstoffe und Verarbeitungshilfsmittel wie Farbstoffe, Pigmente, Trennmittel, Antioxidantien, UV-Stabilisatoren enthalten. Der Anteil dieser Zusätze liegt gewöhnlich bei 0 bis 50, bevorzugt 5 bis 40 Gewichtsteile pro 100 Gewichtsteilen der Gesamtmenge.

Bevorzugt sind Formmassen, die ein Polyacetal, mindestens ein Gleitmittel und mindestens einen faserförmigen Stoff enthalten. Besonders bevorzugt werden Formmassen, die ein Polyacetal, ultrahochmolekulares Polyethylen oder PTFE und mindestens einen faserförmigen Stoff enthalten. Besonders vorteilhaft ist eine Formmasse, die ein Polyacetal, ultrahochmolekulares Polyethylen und unmodifizierte oder modifizierte Glasfaser enthält. Solche Formmassen zeichnen sich durch eine besonders hohe Abriebfestigkeit und Steifheit aus.

Ultrahochmolekulares Polyethylen wird beispielsweise als Pulver, insbesondere als Mikropulver eingesetzt. Die Pulver haben im allgemeinen einen mittleren Korndurchmesser D₅₀ im Bereich von 1 bis 5000 µm, bevorzugt 10 bis 500 µm und besonders bevorzugt 10 bis 150 µm.

Die modifizierte oder unmodifizierte Glasfaser hat im allgemeinen einen Nenndurchmesser im Bereich von 1 bis 1000 µm, bevorzugt im Bereich von 1 bis 100 µm und besonders bevorzugt im Bereich von 1 bis 20 µm. Die modifizierte oder unmodifizierte Glasfaser hat im allgemeinen eine mittlere Faserlänge im Bereich von 0,1 bis 100 mm, bevorzugt im Bereich von 1 bis 100 mm und besonders bevorzugt im Bereich von 5 bis 20 mm.

Die Formmassen gemäß der Erfindung, insbesondere Formmassen, die Polyacetal enthalten, eignen sich besonders für folgende Verwendungen:
Kfz-Industrie:
   Gleit- und Funktionsteile in Gurtretraktorsystemen, Zahnräder und Funktionsteile u.a. für Scheibenwischerantrieb und Betätigungsgestänge, Scheibenwischerlager, Sitzverstellung, Fensterheberantrieb, Spiegelverstellung,Schiebedächer.
Allg. Maschinenbau und Feinwerktechnik:
   Transportketten, Zahnstangen und Zahnräder (u.a. für Antriebselemente), Verstellmechanismen, Lagerbuchsen und Funktionsteile (u.a. für Eisenbahnen, Seilbahnen).
Möbelindustrie:
   Scharniere (u.a. für Schränke, Schreibtische), Gleitlagerböcke, Rollen und Verschleißleisten (u.a. für Schubladen, Schiebetüren).
Kleingeräte: Zahnräder im Getriebebereich bei Küchenmaschinen, Fleischwolf, Handmixer, Zerkleinerer, Entsafter, Zitruspressen, Körnerquetsche, Allesschneider.
Weißgeräte: Türschanier für Geschirrspüler, Waschmaschinen und Trockner, Funktionsteile für Riemenspanner bei Wäschetrockner, Einzelteile für Stoßdämpfer, Waschmaschine, Gehäuse für Türbremse bei Geschirrspüler, Riemenrad für Wäschetrockner.
Elektro-Werkzeuge (bevorzugt Heimwerkerbereich):
   Zahnräder für elektrische Rasenpflege-Geräte, Rasenmäher, Grasschere, Zahnräder für elektrische Heckenscheren und Kettensägen, Funktionsteile in Häckslern.

Weitere Anwendungen sind: Lagerböcke, Funktionsteile für elektrische Epilier-Geräte, Düsenteile für Staubsauger, Funktionsteile für Rasierer, Bartschneider, Haarschneidegeräte, Outsert-Anwendungen (steife Gleitlager).

### Beispiele

Für die Beispiele 1 bis 3 und die Vergleichsbeispiele A und B wurde ein Copolymerisat aus Trioxan mit Dioxolan mit einem Schmelzindex MFR 190/2,16 von 2,5 g/10 min (® Hostaform C 2521) verwendet. Das Copolymerisat wurde mit folgenden Zusatzstoffen versetzt:

PE-UHMW Mikropulver, mittlerer Korndurchmesser 1.20 µm, Viskositätszahl nach DIN 53 728-4 = 2300 ml/g.

Schnittglasfaser, Nenndurchmesser der Filamente ca. 13 µm, mittlere Faserlänge ca. 4,5 mm.

Das Copolymerisat wurde mit den aufgeführten Zuschlägen in einem langsam laufenden Mischer vermischt, anschließend einem Doppelschneckenextruder Typ ZSK 25 (Firma Werner u. Pfleiderer, Stuttgart, Bundesrepublik Deutschland) zugeführt und bei einer Massetemperatur von ca. 200°C aufgeschmolzen und in Granulatform gebracht.

Nach Trocknung in einem Umlufttrockenschrank, acht Stunden bei 120°C, wurden die Probekörper zur Prüfung der mechanischen, thermischen und tribologischen Eigenschaften auf einer Spritzgußmaschine Typ KM 90/210 B (Firma Krauss Maffei, München, Bundesrepublik Deutschland) hergestellt. Die Verarbeitungsbedingungen wurden nach den Empfehlungen der Stoffnorm für Polyoxymethylen ISO 9988-2 gewählt.

### Gemessen wurden:

Zug-E-Modul nach ISO 527 Teil 1 und 2
Wärmeformbeständigkeit HDT / A nach ISO 75 Teil 1 und 2
Charpy Schlagzähigkeit nach ISO 179 1eU

### Verschleißmessung:

Der Abrieb wurde nach dem Testprinzip "pin on ring" nach ISO/DIS 7148-2 gemessen. Auf einer rotierenden Welle werden zylindrische Probekörper mit 12 mm Durchmesser aus dem zu prüfenden Werkstoff aufgepreßt und in Abhängigkeit von der Zeit das Verschleißvolumen an den Probekörpern bestimmt.

### Die Prüfbedingungen waren wie folgt:

| | |
|---|---|
| Werkstoff Welle | Stahl |
| Wellendurchmesser | 65 mm |
| Rauhtiefe Rz | 0,8 µm |
| Belastung | 3,1 N |
| Gleitgeschwindigkeit | 136 m/min |
| Versuchsdauer | 60 h |

**Tabelle 1:**

| Bestimmung des Verschleißvolumens, des Zug-E-Moduls und der Wärmeformbeständigkeit sowie der Charpy Schlagzähigkeit | | | | | | |
|---|---|---|---|---|---|---|
| Beispiele | | A | B | 1 | 2 | 3 |
| POM-Copolymer | Gew.-% | 74 | 90 | 80 | 70 | 60 |
| Glasfaser | Gew.-% | 26 | - | 10 | 20 | 30 |
| PE-UHMW | Gew.-% | - | 10 | 10 | 10 | 10 |
| Verschleißvolumen | mm³ | 32 | 1 | 2,8 | 3 | 3,5 |
| Zug-E-Modul ISO 527 | N/mm² | 9000 | 2200 | 4000 | 6500 | 8900 |
| Wärmeformbeständigkeit | | | | | | |
| HDT/A ISO 75 | °C | 160 | 85 | 116 | 135 | 140 |
| Charpy Schlagzähigkeit | | | | | | |
| ISO 179 | mJ/mm² | 30 | 50 | 32 | 24 | 12 |

Für die Beispiele 4 bis 5 wurde ein Copolymerisat aus Trioxan mit Dioxolan mit einem Schmelzindex MFR 190/2,16 von 9,5 g/10 min (® Hostaform C 9021) verwendet. Das Copolymerisat wurde mit folgenden Zusatzstoffen versetzt:

PE-UHMW Mikropulver, mittlerer Korndurchmesser 120 µm, Viskositätszahl nach DIN 53 728-4 = 2300 ml/g.

Modifizierte Schnittglasfaser, Typ RES03-TP33G (Firma Nippon Glas Fiber Co., Komoricho Takachya, Japan), Nenndurchmesser der Filamente ca. 10 µm, mittlere Faserlänge ca. 3 mm. Die Glasfaser ist silanisiert und mit Polyurethan behandelt.

Die Probekörper zur Prüfung der mechanischen, thermischen und tribologischen Eigenschaften wurden nach dem gleichen Verfahren und unter den gleichen Verarbeitungsbedingungen wie die Beispiele 1 bis 3 und die Vergleichsbeispiele A und B hergestellt.

### Gemessen wurden:

Zug-E-Modul nach ISO 527 Teil 1 und 2
Wärmeformbeständigkeit HDT / A nach ISO 75 Teil 1 und 2
Verschleißmessung wie für die Beispiele 1 bis 3 und die Vergleichsbeispiele A und B beschrieben.

**Tabelle 2:**

| Bestimmung des Verschleißvolumens, des Zug-E-Moduls und der Wärmeformbeständigkeit | | | |
|---|---|---|---|
| Beispiele | | 4 | 5 |
| POM-Copolymer | Gew.-% | 85 | 69 |
| Glasfaser | Gew.-% | 10 | 26 |
| PE-UHMW | Gew.-% | 5 | 5 |
| Verschleißvolumen | mm³ | 1,5 | 1,9 |
| Zug-E-Modul ISO 527 | N/mm² | 4400 | 8800 |
| Wärmeformbeständigkeit | | | |
| HDT/A ISO 75 | °C | 155 | 162 |

## Patentansprüche

1. Polyamid-Formmasse enthaltend 50-90 Gew.-% eines Polymides, 5-30 Gew.-% eines ultrahochmolekularen Polyethylenes, 5-40 Gew.-% eines faserförmigen Materials ausgewählt aus der Gruppe Glasfasern, Kohlefasern, mineralische Fasern. Whiskers, Polymerfasern, modifizierter Glasfasern, organische Hochmodulfasern, und gegebenenfalls weiteren Zusatzstoffen.

2. Polyamid-Formmasse enthaltend 60-80 Gew.-% eines Polyamides, 5-20 Gew.-% eines ultrahochmolekularen Polyethylens mit einem mittleren Korndurchmesser von 1 bis 5000 µm, 10-30 Gew.-% eines faserförmigen Materials ausgewählt aus der Gruppe Glasfasern. Kohlefasern, mineralische Fasern, Whiskers, modifizierter Glasfasern, Polymerfasern, organische Hochmodulfasern und gegebenenfalls weiteren Zusatzstoffe.

3. Polyamid-Formmasse nach Anspruch 1 oder 2, wobei das verwendete ultrahochmolekulare Polyethylen einen mittleren Korndurchmesser von 10 bis 500 µm besitzt.

4. Verwendung der Formmassen nach einem oder mehreren der Ansprüche 1 bis 3 zur Herstellung von Formteilen mit verbesserter Abriebfestigkeit, insbesondere von Zahnrädern, Zahnstangen, Lager, Antriebselemente, Rollen, Ketten, Schiebeelementen.

5. Formkörper mit verbesserter Abriebfestigkeit enthaltend eine Formmasse nach einem oder mehreren der Ansprüche 1 bis 3.
